# FASCICULE DE BREVET EUROPEEN

(11) **EP 3 087 647 B1**
(45) Date de publication et mention de la délivrance du brevet: **28.04.2021**
(21) Numéro de dépôt: 14830847.1
(22) Date de dépôt: 22.12.2014
(51) Int. Cl.: H02H 9/00, H02H 9/02

(54) **CONTRÔLEUR DE PUISSANCE A COMMANDE LINÉAIRE DE LIMITATION DE PICS DE COURANT ET A PROTECTION CONTRE LES COURTS CIRCUITS**
LEISTUNGSREGLER MIT LINEARER STEUERUNG VON STROMSPITZENBEGRENZUNG UND MIT KURZSCHLUSSSCHUTZ
POWER CONTROLLER WITH LINEAR CONTROL OF CURRENT PEAK LIMITATION AND WITH SHORT-CIRCUIT PROTECTION

(30) Priorité: 26.12.2013 FR 1303084
(43) Date de publication de la demande: 02.11.2016
(73) Titulaire: NEXTER Systems, 78034 Versailles Cedex (FR)
(72) Inventeur: BOUKARI, Nabil, F-18023 Bourges (FR); DECROUX, Philippe, F-18023 Bourges (FR); RENAUDIN, Jérôme, F-18023 Bourges (FR)
(74) Mandataire: Cabinet Chaillot
(86) Numéro de dépôt international: PCT/FR2014/053506
(87) Numéro de publication internationale: WO 2015/097394

(56) Documents cités:
- WO-A2-02/061909
- US-A1- 2009 040 677

## Description

La présente invention concerne le domaine de la protection des réseaux électriques, et porte plus particulièrement sur un contrôleur de puissance à semi-conducteurs à commande linéaire permettant de limiter le courant d'appel à la fermeture et assurant la protection contre les courts-circuits.

Les contrôleurs de puissance à semi-conducteurs, aussi appelés SSPC (acronyme de leur dénomination anglaise Solid State Power Controller) ont pour but d'alimenter un circuit récepteur (une charge) en un courant ayant des caractéristiques de tension et de puissance données. Ces contrôleurs mettent en œuvre des contacteurs statiques à semi-conducteurs.

Lors des commutations de charges inductives ou capacitives sur des réseaux à courant continu, les SSPC sont soumis à des pics de courant d'appel, ce qui peut dégrader les composants électroniques de puissance du SSPC et également les équipements en aval du SSPC.

Ces pics de courant sont particulièrement destructeurs pour les circuits à courant continu à haute tension (HVDC, acronyme de la dénomination anglaise de High Voltage Direct Current).

Il existe à l'heure actuelle des systèmes permettant de limiter le courant d'appel lors de la mise sous tension (ces systèmes étant désignés habituellement systèmes « soft start », c'est-à-dire à démarrage doux), consistant généralement en une ou plusieurs résistances et un ou plusieurs transistors de puissance en parallèle ou en série, ces résistances et condensateurs étant soit intégrés à la charge, soit intégrés dans le SSPC.

On connaît en particulier de la demande de brevet européen EP2398146 un système de commande à découpage des interrupteurs statiques, où un circuit intégré au SSPC, en l'occurrence un transistor de type MOSFET associé à une résistance et à une diode, assure une modulation de largeur d'impulsions.

Ces systèmes ont l'avantage d'avoir une structure simple, mais présentent de nombreux inconvénients. En particulier, on impose un encombrement et un poids supplémentaires à ceux du SSPC en raison des composants ajoutés, on introduit des pertes non négligeables une fois le ou les transistors fermés et on ne peut pas régler le courant d'appel maximal.

Ces systèmes posent également des problèmes de compatibilité électromagnétique en raison de la commande à découpage des interrupteurs statiques ajoutés qui est génératrice de perturbations électromagnétiques.

En outre, le système décrit dans la demande de brevet européen EP2398146 est limité à un emploi unidirectionnel, c'est-à-dire pour l'alimentation d'une charge consommatrice d'énergie. Il n'est pas adapté pour assurer une commande bidirectionnelle, c'est-à-dire à la fois la commande de l'alimentation d'une charge capacitive et la liaison à un réseau d'un générateur fortement inductif. En effet, il n'est pas possible d'ouvrir la liaison source/charge à moins d'utiliser un contacteur supplémentaire en série avec ce système.

La demande de brevet US2009/0040677 décrit elle aussi un dispositif à commande à découpage permettant de limiter les surintensités de démarrage pour un circuit convertisseur de puissane.

Cependant, le dispositif de la demande de brevet US2009/0040677 ne décrit pas une commande linéaire du composant de puissance mais plutôt une commande en tout ou rien d'un FET suivant une fréquence qui est pilotée par le dispositif. En outre, l'unité de détection de courant de ce dispositif est configurée pour mesurer le courant circulant dans un transistor qui ne se trouve pas dans la partie puissance du circuit, ce dispositif ne permet donc pas la mesure du courant circulant dans les composants électroniques de puissance et/ou de la tension aux bornes de ceux-ci, de telle sorte qu'il ne permet pas la commande en tension ou en courant ou en température de la partie puissance d'un circuit sans connaître les caractéristiques de la charge appliquée au circuit.

On connaît aussi par le brevet WO02/061909 un dispositif de limitation de courant pour un circuit comportant une forte capacité ballast, en particulier pour un circuit d'alimentation basse tension (24 Volts) d'une imprimante. Ce circuit comprend un amplificateur opérationnel qui est commandé linéairement de façon à piloter un transistor à effet de champ et à limiter ainsi les sur intensités. Un tel circuit utilise directement la puissance d'alimentation de la capacité pour commander le transistor.

Un tel montage est bien adapté à une commande d'un circuit dont les intensités et les tensions sont modérées (ici tension de 24 Volts) et en particulier dont la charge (la capacité) a une valeur bien connue et maîtrisée.

Il est par contre inadapté à la commande d'un circuit de puissance fonctionnant avec des niveaux d'intensité bien plus élevés et pour lesquels la valeur de la charge qui doit être alimentée est a priori inconnue.

Le dispositif du brevet WO02/061909 mesure la tension aux bornes de la charge et non aux bornes du FET, ce qui ne permet pas de protéger le composant de puissance indépendamment de la charge à laquelle il est raccordé. Ce dispositif ne permet donc pas la mesure du courant circulant dans les composants électroniques de puissance et/ou de la tension aux bornes de ceux-ci, de telle sorte qu'il ne permet pas la commande en tension ou en courant ou en température de la partie puissance d'un circuit sans connaître les caractéristiques de la charge appliquée au circuit.

La présente invention vise à résoudre ces problèmes, et porte sur un contrôleur de puissance à semi-conducteurs (SSPC) intégrant une fonction de commande linéaire permettant de limiter les pics de courant, par un asservissement linéaire en courant, ou en tension, ou en température.

En outre, le contrôleur de puissance à semi-conducteurs (SSPC) peut également implémenter une fonction de protection contre les courts-circuits, par évaluation de la température des composants électroniques de puissance.

L'invention a donc pour objet un dispositif de limitation de pics de courant pour un contrôleur de puissance à semi-conducteurs, qui assure la limitation des pics de courant en entrée, évite les perturbations électromagnétiques et n'introduit pas de composants électroniques de puissance supplémentaires, donc à encombrement et poids constants. Le contrôleur selon l'invention peut en outre être utilisé de façon bidirectionnelle.

Une telle mise en œuvre est particulièrement intéressante pour les réseaux électriques continus de forte puissance, par exemple ceux mis en œuvre dans les véhicules.

L'invention met plus particulièrement en œuvre une commande linéaire du courant, de la tension ou de la température de la partie puissance (contacteurs) du SSPC. La régulation est effectuée par les modules fonctionnels déjà présents dans le SSPC, par asservissement en régime linéaire des composants électroniques de puissance de commutation de la partie puissance du SSPC.

Les avantages de la solution de la présente invention sont les suivants :
- gain de volume et de masse ;
- pas de perturbations électromagnétiques en raison du mode de fonctionnement du composant de puissance (en régime linéaire et non pas par commutation) ;
- précision de commande due à la chaîne de mesure, de la consigne et du correcteur ;
- pas de pertes supplémentaires dues à des composants de puissance ajoutés comme dans l'état antérieur de la technique, après la phase « soft-start » ;
- possibilité de définir le courant d'appel maximal ;
- faible coût de revient par utilisation des fonctions déjà présentes dans le SSPC ;
- possibilité de fonctionner sur des charges capacitives ou de type inductif-capacitif (LC) ;
- limitation de la durée de la phase de « soft-start », afin de protéger les composants de puissance en cas de charge trop capacitive, ou lors d'un court-circuit.

L'invention permet également d'assurer une commande en tension ou en courant ou en température d'une partie puissance d'un circuit sans pour autant connaître les caractéristiques de la charge qui sera appliquée au circuit. On commande en effet avec l'invention directement les composants électroniques de puissance en fonction des caractéristiques de courant et/ou de tension qui sont appliquées à ces composants. L'invention est donc particulièrement adaptée aux contrôleurs de puissance SSPC destinés à commander des composants électroniques de puissance mis en place dans des circuits fonctionnant avec des tensions importantes (de 100 volts à 1000 volts) et avec des intensités de quelques ampères pendant la phase de fermeture ou d'ouverture.

La présente invention a donc pour objet un contrôleur de puissance à semi-conducteurs (SSPC), comprenant une partie puissance à base d'un ou plusieurs composants électroniques de puissance, et une partie commande comprenant au moins un dispositif de traitement de signaux et pilotant le fonctionnement de la partie puissance, caractérisé par le fait que le dispositif de traitement de signaux exécute une fonction de commande linéaire de la partie puissance pour limiter le courant d'appel lors de la mise sous tension d'une charge sur un réseau à courant continu par l'intermédiaire du contrôleur de puissance à semi-conducteurs, le contrôleur incorporant des moyens assurant la mesure du courant circulant dans le ou les composants électroniques de puissance et/ou de la tension aux bornes du ou des composants électroniques de puissance, ainsi qu'un module permettant de donner une consigne en courant, ou en tension ou en température et un module assurant, en fonction de l'écart entre la mesure et la consigne, une correction en courant ou en tension ou en température qui est appliquée à un circuit de commande de la partie puissance du contrôleur.

Selon un mode de réalisation, la fonction de commande linéaire assure une commande par un asservissement en courant du ou des composants électroniques de puissance.

La fonction de commande linéaire par un asservissement en courant peut comprendre un module de détection de courant circulant dans la partie puissance, un module de génération de consigne de courant, un module de comparaison comparant la consigne de courant et le courant circulant dans la partie puissance, un module de correction de courant, corrigeant la valeur du courant envoyé dans la partie puissance en fonction du résultat de la comparaison par le module de comparaison.

Selon un autre mode de réalisation, la fonction de commande linéaire assure une commande par un asservissement en tension du ou des composants électroniques de puissance.

La fonction de commande linéaire par un asservissement en tension peut comprendre un module de mesure d'une tension de référence dans la partie puissance, un module de génération de consigne de tension, un module de comparaison comparant la consigne de tension et la tension de référence mesurée dans la partie puissance, un module de correction de tension, corrigeant la valeur de la tension de référence dans la partie puissance en fonction du résultat de la comparaison par le module de comparaison.

Avantageusement, le contrôleur de puissance selon l'invention peut comprendre un module de protection contre les courts-circuits.

Ce module de protection contre les courts-circuits pourra comprendre un module de détection de la température du ou des composants électroniques de puissance de la partie puissance, déclenchant un circuit de protection de la partie puissance lorsque la température mesurée est supérieure à une valeur de température de référence.

Le module de détection de la température du ou des composants électroniques de puissance peut comprendre un module de mesure de courant, un module de mesure de tension et un module de modélisation thermique du ou des composants électroniques de puissance donnant une valeur d'élévation de température pour une tension et un courant mesurés.

Le module de modélisation thermique peut ainsi utiliser un modèle de Foster ou un modèle de Cauer pour la modélisation thermique de composant électronique de puissance, ce modèle étant réalisé sous la forme d'un réseau de condensateurs et de résistances.

Selon un autre mode de réalisation, la fonction de commande linéaire assure une commande par un asservissement en température du ou des composants électroniques de puissance.

La fonction de commande linéaire par un asservissement en température peut comprendre un module de mesure d'une tension de référence dans la partie puissance, un module de mesure d'un courant circulant dans la partie puissance, un module de génération de consigne de température, un module d'estimation de la température des composants de puissance, un module de comparaison comparant la température estimée et une température de consigne, un module de correction de température assurant une correction de la tension et/ou de l'intensité de référence dans la partie puissance en fonction du résultat de la comparaison par le module de comparaison.

Le module d'estimation de la température du ou des composants de puissance peut utiliser un modèle de Foster ou un modèle de Cauer pour la modélisation thermique de composant électronique de puissance, ce modèle étant réalisé sous la forme d'un réseau de condensateurs et de résistances.

Avantageusement, le contrôleur de puissance à semi-conducteurs peut comprendre un module de limitation de la valeur du courant dans la partie puissance.

Avantageusement et pour tous les modes de réalisation, le contrôleur de puissance à semi-conducteurs peut comprendre un module de coupure permettant d'interrompre le fonctionnement au-delà d'un certain délai de fonctionnement en mode pré-charge.

Pour mieux illustrer l'objet de la présente invention, on va maintenant en décrire ci-après un mode de réalisation, à titre illustratif et non limitatif, en liaison avec les dessins annexés.

Sur ces dessins :
- la Figure 1 est un schéma d'une architecture de fonction de commande linéaire en courant pour un contrôleur de puissance à semi-conducteurs selon la présente invention ;
- la Figure 2 est un schéma d'une architecture de fonction de commande linéaire en tension pour un contrôleur de puissance à semi-conducteurs selon la présente invention ;
- la Figure 3 est un schéma synoptique d'une mise en œuvre matérielle d'une fonction de protection contre les courts-circuits pour un contrôleur de puissance à semi-conducteurs selon la présente invention ; et
- la Figure 4 est un schéma synoptique d'une architecture de fonction de commande linéaire en température pour un contrôleur de puissance à semi-conducteurs selon la présente invention.

En préambule technique à cette description détaillée, on peut mentionner pour mémoire qu'un contrôleur de puissance à semi-conducteurs comprend de manière schématique une partie puissance, comprenant des composants électroniques de puissance de commutation commandés par une partie commande pilotant les composants électroniques de puissance servant à la commutation. La charge est connectée aux bornes de la partie puissance, qui peut comprendre un ou plusieurs composants électroniques de puissance, l'invention n'étant pas limitée à cet égard et pouvant être appliquée à tout type de contrôleur de puissance à semi-conducteurs.

La partie commande peut comprendre divers éléments en fonction du type de contrôleur de puissance à semi-conducteurs (SSPC), mais les commandes d'asservissement sont réalisées d'une façon préférée par des circuits électroniques assurant un traitement analogique des différents signaux. Un traitement numérique des signaux serait bien entendu possible mais plus coûteux.

En outre, la partie commande comprend des câblages et des dispositifs de mesure, notamment du courant et de la tension au sein du contrôleur de puissance à semi-conducteurs.

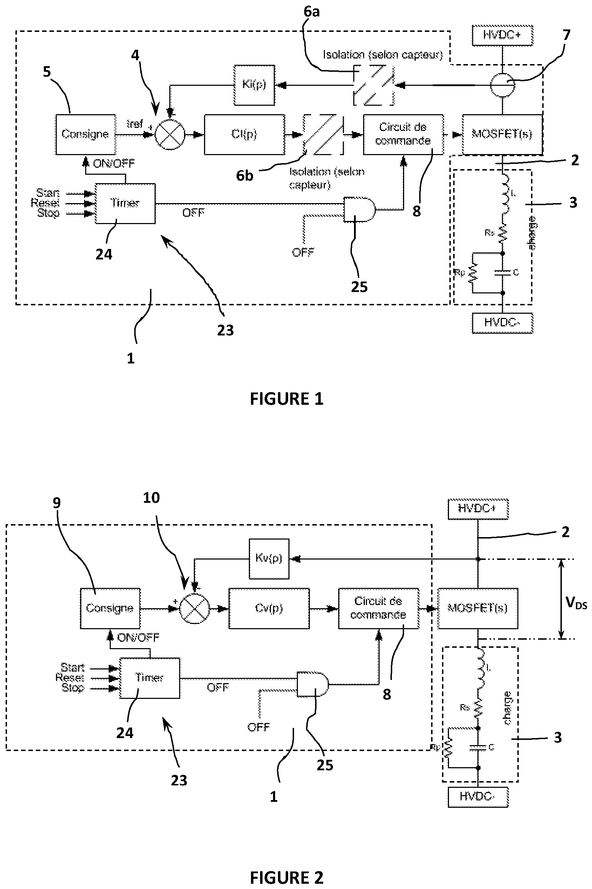

Si l'on se réfère à la Figure 1, on peut voir que l'on y a représenté une commande linéaire en courant mise en œuvre dans un contrôleur de puissance 1 à semi-conducteurs selon un premier mode de réalisation de l'invention.

On entend par commande linéaire une commande d'asservissement par un moyen de correction qui est régi par un système d'équations différentielles linéaires. C'est-à-dire des équations différentielles qui ont une forme linéaire par rapport à la variable d'état sur laquelle est basé l'asservissement et ses dérivées successives (ici le courant).

La commande qui est décrite ici est assurée sur une seule ligne de courant 2, celle conduisant du pôle positif HVDC+ de la source à la charge 3.

Il est bien entendu possible de prévoir un autre dispositif de commande linéaire d'un autre contacteur MOSFET (non représenté sur la figure) qui sera disposé entre le pôle négatif HVDC- de la source et la charge 3. Une telle solution sera particulièrement intéressante pour assurer un fonctionnement bidirectionnel du dispositif.

La commande linéaire en courant comprend un correcteur de courant Ci(p), un gain de mesure de courant Ki(p) circulant dans la partie puissance, un comparateur de courant 4, et une consigne de courant 5 qui est générée dans le SSPC, le correcteur de courant Ci(p) étant isolé de la partie commande par une isolation galvanique 6b.

La consigne de courant est engendrée par un organe réglable (potentiomètre).

L'isolation galvanique pourra être assurée par un coupleur optique.

Des capteurs de courant 7, présents dans le SSPC, mesurent le courant circulant dans les composants électroniques de puissance de la partie commande (donc ici dans le ou les composants électroniques de puissance MOSFET). Ces capteurs sont des composants classiques ou des miroirs de courant implantés directement dans le canal du MOSFET.

Le courant mesuré par le capteur 7 est envoyé au gain de mesure de courant Ki (p), au besoin par l'intermédiaire d'une isolation galvanique 6a en fonction du capteur, et ce courant mesuré est comparé par l'intermédiaire du comparateur 4 à une valeur de consigne 5. Le correcteur de courant Ci(p) corrige la valeur du courant en fonction de la précédente comparaison, de manière classique, par exemple par un correcteur proportionnel, Intégral et/ou dérivé, dans la boucle de commande et envoie au circuit de commande 8 du contacteur de puissance MOSFET une consigne de courant sous forme d'une tension de grille faisant évoluer la largeur du canal.

Ainsi, on peut fixer un courant de consigne qui constituera le courant d'appel maximal et, au moyen du correcteur de courant Ci (p), on met en œuvre une commande analogique permettant de limiter le courant d'appel lors de la mise sous tension de la charge capacitive en sortie du SSPC. Les composants électroniques mis en œuvre tant pour le comparateur 4 que pour le correcteur de courant sont des composants classiques dans le domaine de la régulation électronique (amplificateurs opérationnels, résistances, capacités). Il serait bien entendu possible mais plus coûteux de réaliser le correcteur de courant Ci(p) sous la forme d'un microprocesseur incorporant un algorithme d'asservissement numérique.

Selon une caractéristique essentielle de l'invention, la limitation du courant est donc assurée par la commande directe des MOSFET du contrôleur de puissance donc sans adjonction de composants de découpage complémentaires.

Le contrôleur de puissance 1 incorpore aussi un module de coupure 23 qui comprend un bloc horloge 24 (timer) disposant de trois entrées et de deux sorties. Ce module 23 permet de prendre en compte le début et la fin d'un cycle soft-start. L'entrée « start » permet de lancer le bloc horloge 24 ainsi que le début d'une phase soft start par changement de la valeur de consigne 5. La consigne appliquée aux circuits passe alors d'une valeur initiale Iref correspondant à un contrôleur de puissance 1 ouvert (Iref=0A) à une valeur Iref de consigne non nulle correspondant à un contrôleur de puissance 1 fermé.

Cette valeur de référence est bien évidemment choisie cohérente avec les limitations imposées par les normes du réseau électrique sur lequel le contrôleur 1 est utilisé, et avec les limitations intrinsèques du contrôleur 1 (limitations thermiques en particulier).

La sortie « OFF » du bloc horloge 24 est alors inhibée et le circuit de commande 8 peut fonctionner.

L'activation de l'entrée « Stop » du bloc horloge 24 permet d'arrêter ce dernier. Cette commande est activée par exemple lorsque le fonctionnement du contrôleur de puissance s'est correctement déroulé avant la fin du délai maximum donné par l'horloge (time-out). Les deux sorties du bloc horloge 24 ne sont pas activées par cette entrée « Stop ».

L'activation de l'entrée « Reset » du bloc horloge 24 permet de remettre le compteur du bloc horloge à zéro. Les deux sorties du bloc horloge 24 ne sont pas activées par cette entrée.

Une fois le bloc horloge 24 activé par « Start », si aucune des deux autres entrées (« reset » ou « stop ») n'est activée, ce qui signifie que le contrôleur de puissance n'a pas pu se fermer au bout du délai donné par le bloc horloge 24, un ordre d'ouverture du contrôleur de puissance 1 est envoyé par l'intermédiaire d'un signal de commande « OFF » vers le circuit de commande 8.

Ainsi, le contrôleur de puissance 1 s'arrête et le MOSFET s'ouvre.

Une porte logique 25 de type OU a été ajoutée pour prendre en compte aussi bien les ordres « OFF » venant du bloc horloge 24 que ceux venant d'autres fonctions de protection (par exemple des protections thermiques décrites par la suite), ou des commandes d'ouverture normale pour arrêt du contrôleur 1.

Si l'on se réfère à la Figure 2, on peut voir que l'on y a représenté un autre mode de réalisation de l'invention, avec une commande linéaire en tension.

Selon ce mode de réalisation, la partie commande du contrôleur de puissance 1 réalise une mesure de la tension aux bornes des composants électroniques de puissance de la partie puissance, en particulier la tension drain source V_{DS} lorsque les composants électroniques de puissance sont des MOSFET. Un gain Kv(p) est appliqué à la mesure réalisée. Le contrôleur 1 comprend aussi un correcteur de tension Cv(p), un générateur de consigne de tension 9 et un comparateur 10 de la tension mesurée (affectée du gain Kv(p)) avec la tension de consigne.

La consigne de tension est engendrée par un organe réglable (potentiomètre).

Le correcteur de tension Cv(p) corrige la valeur de la tension en fonction de la précédente comparaison, de manière classique, par exemple par un correcteur proportionnel, Intégral et/ou dérivé, dans la boucle de commande et envoie au circuit de commande 8 du contacteur de puissance MOSFET une consigne de tension.

On notera qu'ici la consigne 9 est une valeur de tension optimale qui a été définie de telle sorte que le courant circulant dans le MOSFET soit optimisé. Le correcteur de tension Cv(p) agira de façon à commander le contacteur MOSFET pour approcher la valeur de consigne en tension. Ceci est obtenu par modulation de la largeur du canal du MOSFET.

Là encore, le contrôleur de puissance 1 incorpore un module de coupure 23 tel que décrit précédemment.

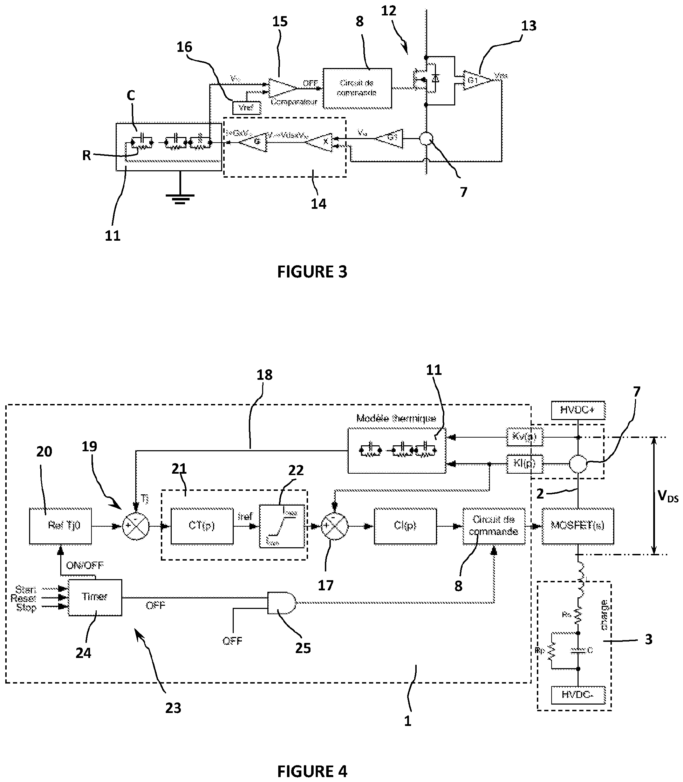

Si l'on se réfère à la Figure 3, on peut voir que l'on y a représenté un schéma synoptique d'un circuit de protection contre les courts-circuits.

Ce circuit de protection peut être associé à l'un ou l'autre des circuits précédents.

Le mode de réalisation représenté repose sur la mise en œuvre matérielle dans le SSPC de circuits RC qui permettent de modéliser l'échauffement thermique du ou des composants électroniques de puissance de la partie puissance. Les circuits de modélisation thermique des composants électroniques de puissance sont bien connus. On pourra mettre en œuvre un modèle thermique de Cauer ou un modèle thermique de Foster.

La Figure 3 montre la mise en œuvre d'un réseau de Foster 11 qui associe des résistances et des capacités, chaque capacité C étant shuntée par une résistance R.

Dans ce mode de réalisation, on mesure la tension V_{DS} entre drain et Source du MOSFET 12 par l'amplificateur 13 (tension aux bornes du composant électronique de puissance). On mesure par ailleurs le courant I de la partie puissance (courant circulant dans le composant électronique de puissance) par un capteur de courant 7, le signal mesuré étant affecté d'un gain G1. On calcule au niveau d'un circuit multiplicateur 14 le produit des valeurs mesurées de la tension drain source et du courant. Ce produit affecté d'un gain G est une image de la puissance électrique instantanée dissipée dans le MOSFET 12. Le signal I=GVp de cette puissance est appliqué au circuit 11 qui est un modèle thermique du ou des composants de puissance. La tension V_{Tj} qui est mesurée à la sortie du circuit 11 est une image de la température du MOSFET 12. Elle est comparée (comparateur 15) à une valeur de référence Vref fournie par un circuit 16 approprié. La valeur de référence correspond à une température de seuil à partir de laquelle le MOSFET doit être ouvert (de l'ordre de 120 °C).

En fonction de l'élévation de température instantanée déterminée à l'étape précédente et du résultat de sa comparaison à une valeur de température seuil prédéterminée, on ouvre ou non le commutateur MOSFET 12 en agissant sur la tension de grille via le circuit de commande 8.

Bien que seule la mise en œuvre matérielle soit décrite sur les Figures, une mise en œuvre logicielle des modèles thermiques des composants électroniques de puissance est tout à fait envisageable sur des SSPC intégrant une unité de calcul numérique, et entre dans le cadre de la présente invention, celle-ci n'étant aucunement limitée à une mise en œuvre matérielle des modèles thermiques des composants électroniques de puissance.

La Figure 4 montre un troisième mode de réalisation de l'invention dans lequel on assure une commande linéaire par un asservissement en température du ou des composants électroniques de puissance MOSFET.

A cet effet le contrôleur de puissance 1 comprend à la fois un module de mesure d'une tension de référence (tension drain source V_{DS} du ou des MOSFET, donc tension aux bornes du ou des composants électroniques de puissance MOSFET) dans la partie puissance et un module de mesure d'un courant circulant dans la partie puissance (courant circulant dans le ou les composants électroniques de puissance).

Comme dans le mode de réalisation selon la Figure 1, un capteur de courant 7 permet de mesurer le courant circulant dans la ligne 2 (courant circulant dans le ou les composants électroniques de puissance). Cette mesure est affectée d'un gain Ki(p) et elle est utilisée, d'une part pour l'asservissement en température, et d'autre part pour assurer une limitation de l'intensité du courant (protection contre les courts- circuits).

Pour limiter l'intensité du courant, on applique l'intensité ainsi corrigée au sommateur 17 qui est suivi d'un correcteur de courant Ci(p) qui assure l'écrêtage de l'intensité et assurera une coupure du MOSFET via le circuit de commande 8 en cas de surintensité.

Parallèlement, l'intensité mesurée et corrigée Ki(p) est appliquée à un circuit de modélisation thermique 11 (modèle de Cauer ou de Foster) avec la mesure corrigée de la tension drain source Kv(p). La sortie 18 du circuit de modélisation thermique 11 (ou module d'estimation de la température des composants de puissance) donne une tension qui est une image de la température du MOSFET. Cette sortie est appliquée à un comparateur 19 dans lequel elle est comparée à une valeur de consigne Tj0 fournie par un module de génération de consigne de température 20 (qui est réalisé sous la forme d'un circuit électronique).

Le résultat de la comparaison est appliqué à un module de correction de température 21 qui incorpore un correcteur de température CT(p) qui va fournir un signal correspondant à une tension ou une intensité de référence qui sera ensuite appliquée au circuit de commande 8 au travers du sommateur 17.

Le module de correction de température 21 incorpore aussi un module 22 assurant le bornage de la consigne de commande.

Le contrôleur de puissance 1 comprendra également un module de coupure 23 tel que décrit précédemment.

L'invention a été décrite dans ses trois modes de réalisation appliquée à l'ouverture d'un seul MOSFET disposé sur une ligne de courant 2 entre le pôle positif HVDC+ de la source et la charge 3.

Il est bien entendu possible de doubler les moyens de commande et d'asservissement pour commander aussi l'ouverture d'un autre MOSFET interposé entre le pôle négatif HVDC- de la source et la charge 3. Une telle disposition permettra d'assurer le caractère bidirectionnel de la commande du contrôleur de puissance.

## Revendications

1. Contrôleur de puissance à semi-conducteurs abréviation SSPC (1), comprenant une partie puissance à base d'un ou plusieurs composants électroniques de puissance, et une partie commande comprenant au moins un dispositif de traitement de signaux et pilotant le fonctionnement de la partie puissance, **caractérisé par le fait que** le dispositif de traitement de signaux exécute une fonction de commande linéaire de la partie puissance pour limiter le courant d'appel lors de la mise sous tension d'une charge (3) sur un réseau à courant continu par l'intermédiaire du contrôleur de puissance à semi-conducteurs (1), le contrôleur incorporant des moyens assurant la mesure du courant circulant dans le ou les composants électroniques de puissance et/ou de la tension aux bornes du ou des composants électroniques de puissance, ainsi qu'un module permettant de donner une consigne en courant (5), ou en tensior (9) ou en température (20) et un module assurant, en fonction de l'écart entre la mesure et la consigne, une correction en courant ou en tension ou en température qui est appliquée à un circuit de commande (8) de la partie puissance du contrôleur.

2. Contrôleur de puissance à semi-conducteurs (1) selon la revendication 1, **caractérisé par le fait que** la fonction de commande linéaire assure une commande par un asservissement en courant du ou des composants électroniques de puissance.

3. Contrôleur de puissance à semi-conducteurs (1) selon la revendication 2, **caractérisé par le fait que** la fonction de commande linéaire par un asservissement en courant comprend un module de détection de courant (7) circulant dans la partie puissance, un module de génération de consigne de courant (5), un module de comparaison (4) comparant la consigne de courant et le courant circulant dans la partie puissance, un module de correction de courant (Ci(p)), corrigeant la valeur du courant envoyé dans la partie puissance en fonction du résultat de la comparaison par le module de comparaison (4).

4. Contrôleur de puissance à semi-conducteurs (1) selon la revendication 1, **caractérisé par le fait que** la fonction de commande linéaire assure une commande par un asservissement en tension du ou des composants électroniques de puissance.

5. Contrôleur de puissance à semi-conducteurs (1) selon la revendication 4, **caractérisé par le fait que** la fonction de commande linéaire par un asservissement en tension comprend un module de mesure d'une tension de référence dans la partie puissance, un module de génération de consigne de tension (9), un module de comparaison (10) comparant la consigne de tension et la tension de référence mesurée dans la partie puissance, un module de correction de tension (Cv(p)), corrigeant la valeur de la tension de référence dans la partie puissance en fonction du résultat de la comparaison par le module de comparaison (10).

6. Contrôleur de puissance à semi-conducteurs (1) selon l'une des revendications 1 à 5, **caractérisé en ce qu'**il comprend un module de protection contre les courts-circuits.

7. Contrôleur de puissance à semi-conducteurs (1) selon la revendication 6, **caractérisé par le fait que** le module de protection contre les courts-circuits comprend un module de détection de la température du ou des composants électroniques de puissance (12) de la partie puissance, déclenchant un circuit de protection de la partie puissance lorsque la température mesurée est supérieure à une valeur de température de référence.

8. Contrôleur de puissance à semi-conducteurs (1) selon la revendication 7 , **caractérisé par le fait que** le module de détection de la température du ou des composants électroniques de puissance comprend un module de mesure de courant (7), un module de mesure de tension (13) et un module de modélisation thermique (11) du ou des composants électroniques de puissance donnant une valeur d'élévation de température pour une tension et un courant mesurés .

9. Contrôleur de puissance à semi-conducteurs (1) selon la revendication 8, **caractérisé par le fait que** le module de modélisation thermique (11) utilise un modèle de Foster ou un modèle de Cauer pour la modélisation thermique de composant électronique de puissance (12), ce modèle étant réalisé sous la forme d'un réseau de condensateurs (C) et de résistances (R).

10. Contrôleur de puissance à semi-conducteurs (1) selon la revendication 1, **caractérisé par le fait que** la fonction de commande linéaire assure une commande par un asservissement en température du ou des composants électroniques de puissance.

11. Contrôleur de puissance à semi-conducteurs selon la revendication 10, **caractérisé par le fait que** la fonction de commande linéaire par un asservissement en température comprend un module de mesure d'une tension de référence dans la partie puissance, un module de mesure d'un courant (7) circulant dans la partie puissance, un module de génération de consigne de température (20), un module d'estimation de la température (11) des composants de puissance, un module de comparaison (19) comparant la température estimée et une température de consigne, un module de correction de température (21) assurant une correction de la tension et/ou de l'intensité de référence dans la partie puissance en fonction du résultat de la comparaison par le module de comparaison (19) .

12. Contrôleur de puissance à semi-conducteurs (1) selon la revendication 11, **caractérisé par le fait que** le module d'estimation de la température (11) du ou des composants de puissance utilise un modèle de Foster ou un modèle de Cauer pour la modélisation thermique de composant électronique de puissance, ce modèle étant réalisé sous la forme d'un réseau de condensateurs (C) et de résistances (R) .

13. Contrôleur de puissance à semi-conducteurs (1) selon la revendication 12, **caractérisé par le fait qu'**il comprend un module de limitation de la valeur du courant dans la partie puissance.

14. Contrôleur de puissance à semi-conducteurs (1) selon une des revendications 1 à 13, **caractérisé par le fait qu'**il comprend un module de coupure permettant d'interrompre le fonctionnement au-delà d'un certain délai de fonctionnement en mode pré-charge.

## Patentansprüche

1. Leistungsregler mit Halbleitern, Abkürzung SSPC (1), umfassend einen Leistungsteil basierend auf einer oder mehreren elektronischen Leistungskomponente(n), und einen Steuerteil, umfassend mindestens eine Vorrichtung zum Verarbeiten von Signalen, und leitend die Funktion des Leistungsteils, **dadurch gekennzeichnet, dass** die Vorrichtung zur Verarbeitung von Signalen eine Funktion zur linearen Steuerung des Leistungsteils ausführt, um den Einschaltstrom während des Anlegens einer Spannung auf eine Last (3) auf ein Netz von Gleichspannung mit Hilfe der Leistungssteuerung mit Halbleitern (1) zu begrenzen, wobei die Steuerung Mittel einschließt, die die Messung des Stroms, der in der oder den elektronischen Leistungskomponente(n) zirkuliert, und/oder der Spannung an den Klemmen des oder der elektronischen Leistungskomponenten sicherstellen, ebenso wie ein Modul, das ermöglicht, einen Strom- (5) oder Spannungs- (9) oder Temperatursollwert (20) anzugeben, und ein Modul, das, je nach der Abweichung zwischen der Messung und dem Sollwert, eine Korrektur des Stroms oder der Spannung oder der Temperatur sicherstellt, die auf einen Steuerkreis (8) des Leistungsteils der Steuerung angewendet wird.

2. Leistungsregler mit Halbleitern (1) nach Anspruch 1, **dadurch gekennzeichnet dass** die lineare Steuerfunktion eine Steuerung durch eine Stromregelung der elektronischen Leistungskomponente(n) sicherstellt.

3. Leistungsregler mit Halbleitern (1) nach Anspruch 2, **dadurch gekennzeichnet dass** die lineare Steuerfunktion durch eine Stromregelung ein Modul zum Nachweis von Strom (7), der im Leistungsteil zirkuliert, ein Modul zur Erzeugung des Stromsollwerts (5), ein Vergleichsmodul (4), das den Stromsollwert und den Strom, der im Leistungsteil zirkuliert, vergleicht, ein Modul zu Korrektur von Strom (Ci(p)), das den Wert des Stroms korrigiert, der in den Leistungsteil je nach dem Ergebnis des Vergleichs durch das Vergleichsmodul (4) geschickt wird, umfasst.

4. Leistungsregler mit Halbleitern (1) nach Anspruch 1, **dadurch gekennzeichnet, dass** die lineare Steuerfunktion eine Steuerung durch Spannungsregelung der elektronischen Leistungskomponente(n) sicherstellt.

5. Leistungsregler mit Halbleitern (1) nach Anspruch 4, **dadurch gekennzeichnet, dass** die lineare Steuerfunktion durch eine Spannungsregelung ein Modul zur Messung einer Referenzspannung im Leistungsteil, ein Modul zur Erzeugung eines Spannungssollwerts (9), ein Vergleichsmodul (10), das den Spannungssollwert und die Referenzspannung, gemessen im Leistungsteil, vergleicht, ein Modul zur Korrektur der Spannung (Cv(p)), das den Wert der Referenzspannung im Leistungsteil, je nach dem Ergebnis des Vergleichs durch das Vergleichsmodul (10), korrigiert, umfasst.

6. Leistungsregler mit Halbleitern (1) nach einem der Ansprüche 1 bis 5, **dadurch gekennzeichnet dass** er ein Modul zum Kurzschlussschutz umfasst.

7. Leistungsregler mit Halbleitern (1) nach Anspruch 6, **dadurch gekennzeichnet, dass** das Modul zum Kurzschlussschutz ein Modul zum Nachweis der Temperatur des oder der elektronischen Leistungskomponenten (12) des Leistungsteils umfasst, das eine Schutzschaltung des Leistungsteils auslöst, wenn die gemessene Temperatur höher als ein Wert der Referenztemperatur ist.

8. Leistungsregler mit Halbleitern (1) nach Anspruch 7, **dadurch gekennzeichnet, dass** das Modul zum Nachweis der Temperatur der elektronischen Leistungskomponente(n) ein Modul zur Messung des Stroms (7), ein Modul zur Messung der Spannung (13) und ein Modul zur thermischen Modellierung (11) der elektronischen Leistungskomponente(n) umfasst, die einen Wert zur Erhöhung der Temperatur für eine gemessene Spannung und einen gemessenen Strom angeben.

9. Leistungsregler mit Halbleitern (1) nach Anspruch 8, **dadurch gekennzeichnet, dass** das Modul zur thermischen Modellierung (11) ein Foster-Modell oder ein Cauer-Modell für die thermische Modellierung der elektronischen Leistungskomponente (12) verwendet, wobei dieses Modell in Form eines Netzes von Kondensatoren (C) und Resistenzen (R) durchgeführt ist.

10. Leistungsregler mit Halbleitern (1) nach Anspruch 1, **dadurch gekennzeichnet, dass** die lineare Steuerfunktion eine Steuerung durch eine Temperaturregelung der elektronischen Leistungskomponente(n) sicherstellt.

11. Leistungsregler mit Halbleitern (1) nach Anspruch 10, **dadurch gekennzeichnet, dass** die lineare Steuerfunktion durch eine Temperaturregelung ein Modul zur Messung einer Referenzspannung im Leistungsteil, ein Modul zur Messung eines Stroms (7), der im Leistungsteil zirkuliert, ein Modul zur Erzeugung eines Temperatursollwerts (20), ein Modul zum Schätzen der Temperatur (11) der Leistungskomponenten, ein Vergleichsmodul (19), das die geschätzte Temperatur und eine Sollwerttemperatur vergleicht, ein Modul zur Korrektur der Temperatur (21), das eine Korrektur der Referenzspannung und/oder der Referenzintensität im Leistungsteil je nach dem Ergebnis des Vergleichs durch das Vergleichsmodul (19) sicherstellt, umfasst.

12. Leistungsregler mit Halbleitern (1) nach Anspruch 11, **dadurch gekennzeichnet, dass** das Modul zum Schätzen der Temperatur (11) der Leistungskomponente(n) ein Foster-Modell oder ein Cauer-Modell für die thermische Modellierung der elektronischen Leistungskomponente verwendet, wobei dieses Modell in Form eines Netzes von Kondensatoren (C) und Resistenzen (R) durchgeführt wird.

13. Leistungsregler mit Halbleitern (1) nach Anspruch 12, **dadurch gekennzeichnet, dass** er ein Modul zur Begrenzung des Werts des Stroms im Leistungsteil umfasst.

14. Leistungsregler mit Halbleitern (1) nach einem der Ansprüche 1 bis 13, **dadurch gekennzeichnet, dass** er ein Schnittmodul umfasst, das ermöglicht, die Funktion über eine bestimmte Funktionsverzögerung hinaus im Vorlademodus zu unterbrechen.

## Claims

1. A solid-state power controller, abbreviated SSPC (1), comprising a power portion with a base of one or several electronic power components, and a control portion comprising at least one signal processing device and controlling the operation of the power portion, **characterized in that** the signal processing device executes a linear control function of the power portion in order to limit the inrush current when applying voltage to a load (3) on a DC network by means of the solid-state power controller (1), the controller incorporating means ensuring the measurement of the current circulating in the electronic power component(s) and/or the voltage across the terminals of the electronic power components, as well as a module making it possible to provide a current setpoint (5), or voltage setpoint (9), or temperature setpoint (20) and a module ensuring, as a function of the deviation between the measurement and the setpoint, a current or voltage or temperature correction which is applied to a control circuit (8) of the power portion of the controller.

2. The solid-state power controller (1) according to claim 1, **characterized in that** the linear control function ensures control by current regulation of the electronic power component(s).

3. The solid-state power controller (1) according to claim 2, **characterized in that** the linear control function by current regulation comprises a current detection module (7) detecting current circulating in the power portion, a current setpoint generating module (5), a comparison module (4) comparing the current setpoint and the current circulating in the power portion, a current correction module (Ci(p)), correcting the value of the current sent into the power portion as a function of the result of the comparison by the comparison module (4).

4. The solid-state power controller (1) according to claim 1, **characterized in that** the linear control function ensures control by voltage regulation of the electronic power component(s).

5. The solid-state power controller (1) according to claim 4, **characterized in that** the linear control function by voltage regulation comprises a module for measuring a reference voltage in the power portion, a voltage setpoint generating module (9), a comparison module (10) comparing the voltage setpoint and the reference voltage measured in the power portion, a voltage correction module (Cv(p)), correcting the value of the reference voltage in the power portion as a function of the result of the comparison by the comparison module (10).

6. The solid-state power controller (1) according to one of claims 1 to 5, **characterized in that** it comprises a module for protecting against short-circuits.

7. The solid-state power controller (1) according to claim 6, **characterized in that** the module protecting against short-circuits comprises a module for detecting the temperature of the electronic power component(s) (12) of the power portion, triggering a circuit for protecting the power portion when the measured temperature is above a reference temperature value.

8. The solid-state power controller (1) according to claim 7, **characterized in that** the module for detecting the temperature of the electronic power component(s) comprises a current measuring module (7), a voltage measuring module (13) and a thermal modeling module (11) of the electronic power component(s) yielding a temperature increase value for a measured voltage and current.

9. The solid-state power controller (1) according to claim 8, **characterized in that** the thermal modeling module (11) uses a Foster model or a Cauer model for the electronic power component thermal model (12), this model being done in the form of a network of capacitors (C) and resistances (R).

10. The solid-state power controller (1) according to claim 1, **characterized in that** the linear control function ensures control by temperature regulation of the electronic power component(s).

11. The solid-state power controller according to claim 10, **characterized in that** the linear control function by temperature regulation comprises a module for measuring a reference voltage in the power portion, a module for measuring a current (7) circulating in the power portion, a module for generating a temperature setpoint (20), a module for estimating the temperature (11) of the power components, a comparison module (19) comparing the estimated temperature and a setpoint temperature, a temperature correction module (21) ensuring a correction of the voltage and/or of the reference intensity in the power portion as a function of the result of the comparison by the comparison module (19).

12. The solid-state power controller (1) according to claim 11, **characterized in that** the module for estimating the temperature (11) of the power component(s) uses a Foster model or a Cauer model for the electronic power component thermal model, this model being done in the form of a network of capacitors (C) and resistances (R).

13. The solid-state power controller (1) according to claim 12, **characterized in that** it comprises a module for limiting the value of the current in the power portion.

14. The solid-state power controller (1) according to one of claims 1 to 13, **characterized in that** it comprises a cutoff module making it possible to interrupt the operation beyond a certain operating time in pre-load mode.
